(19)

Europäisches
Patentamt
European
Patent Office
Office européen
des brevets

(11) **EP 2 437 233 A1**

(12) **EUROPEAN PATENT APPLICATION**
published in accordance with Art. 153(4) EPC

(43) Date of publication:
**04.04.2012 Bulletin 2012/14**

(51) Int Cl.:
*G08G 1/16* (2006.01)   *B60Q 1/08* (2006.01)
*B60Q 1/14* (2006.01)   *B60Q 1/24* (2006.01)
*G06T 1/00* (2006.01)   *H04N 7/18* (2006.01)

(21) Application number: **10780518.6**

(22) Date of filing: **24.05.2010**

(86) International application number:
**PCT/JP2010/058757**

(87) International publication number:
**WO 2010/137563 (02.12.2010 Gazette 2010/48)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **25.05.2009 JP 2009125444**

(71) Applicant: **Hitachi Automotive Systems, Ltd.
Hitachinaka-shi
Ibaraki 312-8503 (JP)**

(72) Inventors:
• **OTSUKA Yuji
  Hitachinaka-shi
  Ibaraki 312-8503 (JP)**
• **MONJI Tatsuhiko
  Hitachinaka-shi
  Ibaraki 312-8503 (JP)**

(74) Representative: **MERH-IP
Matias Erny Reichl Hoffmann
Paul-Heyse-Strasse 29
80336 München (DE)**

(54) **IMAGE PROCESSING APPARATUS**

(57)   An image processing apparatus capable of detecting, simultaneously and with high precision, headlights of oncoming cars, taillights of cars ahead, and pedestrians at night, the image processing apparatus comprising: means that obtains first exposure data at a first shutter speed; means that obtains second exposure data at a second shutter speed that is slower than the shutter speed; means that obtains third exposure data at a third shutter speed that is slower than the first shutter speed; means that converts the first exposure data into a visible grayscale image; means that outputs the visible grayscale image; means that converts the second exposure data into a color image; means that outputs the color image; means that converts the third exposure data into an infrared grayscale image; means that outputs the infrared grayscale image; means that detects a headlight based on the visible grayscale image; means that detects a taillight based on the color image; and means that detects a pedestrian based on an image obtained by processing the infrared grayscale image and the color image.

Figure 5

EP 2 437 233 A1

**Description**

TECHNICAL FIELD

The present invention relates to an image processing apparatus for use as a sensor for performing light distribution control, etc., of headlights for cars.

BACKGROUND ART

Methods of detecting headlights of oncoming cars or taillights of cars ahead with a camera in order to perform light distribution control for high beams/low beams of headlights at night have previously been proposed. By way of example, Patent Document 1 discloses an apparatus that detects headlights and taillights efficiently using color information of light spots within an image taken using a color camera. Light sources that cameras might capture at night are not restricted to headlights and taillights for which detection is desired. Instead, noise light sources that ought to be excluded, such as street lights, traffic lights, reflectors (reflector plates), etc., also exist. Since such noise light sources are brighter than the light of distant taillights that are to be detected, it is possible to extract only headlights and taillights efficiently by using color information obtained with a color camera. The color camera has improved chromatic resolving power as it is covered with color filters of an RGB Bayer pattern above an imaging device, and, further, a low-pass filter for cutting off infrared light, which becomes noise, is used thereabove.

On the other hand, there have also been proposed methods of detecting pedestrians at night with a camera for the purpose of aiding in the recognition of pedestrians that are difficult to see at night. Patent Document 2 discloses an apparatus wherein, of the pixels of an image taken by an infrared camera, a pixel group whose brightness values are at or above a threshold (pedestrian) and a pixel group that is below the threshold (background, etc.) are separated by brightness, and distinct processing is respectively performed for the two kinds of pixel groups thus separated by brightness, and the result of adding these and the original image of the infrared camera is displayed.

In addition, Patent Document 3 discloses an apparatus wherein, based on an infrared image, a region where bright parts are concentrated is looked for, and is determined as being the head of the detection subject. As an imaging means for detecting pedestrians, a combination of a near infrared projector and near infrared camera, or a far infrared camera is commonly used.

If one were to simultaneously realize the above-mentioned light distribution control function and the pedestrian detection function, the wavelength range of visible light would be used for the color camera, and the wavelength range of infrared light would be used for pedestrian detection. Thus, ordinarily, it would be difficult to realize them with a single imaging device. As such, Patent Document 4 discloses an imaging apparatus wherein light receiving elements for visible light and light receiving elements for infrared light are arranged in a mixed manner, and a visible image and an infrared image are each outputted simultaneously.

Prior Art Documents

Patent Documents

Patent Document 1: JP Patent Application Publication No. 62-131837 A (1987)
Patent Document 2: JP Patent Application Publication No. 11-243538 A (1999)
Patent Document 3: JP Patent Application Publication No. 11-328364 A (1999)
Patent Document 4: JP Patent Application Publication No. 2001-189926 A

SUMMARY OF THE INVENTION

Problems to be Solved by the Invention

However, with the related art, it is difficult to detect pedestrians with favorable precision while also detecting an object of a different light intensity, such as headlights or taillights. As such, further improvements in imaging methods have been an issue.

An object of the present invention is to provide an image processing apparatus that is capable of detecting, simultaneously and without error, headlights of oncoming cars, taillights of cars ahead, and pedestrians at night.

Means for Solving the Problems

In order to achieve the object above, an image processing apparatus of the present invention comprises: means that obtains first exposure data at a first shutter speed; means that obtains second exposure data at a second shutter speed that is slower than the shutter speed; means that obtains third exposure data at a third shutter speed that is slower than the first shutter speed; means that converts the first exposure data into a visible grayscale image or a color image; means that outputs the visible grayscale image; means that converts the second exposure data into a color image; means that outputs the color image; means that converts the third exposure data into an infrared grayscale image; and means that outputs the infrared grayscale image.

In addition to the features above, an image processing apparatus of the present invention further comprises: means that detects a headlight based on the visible grayscale image or the color image of the first exposure data; means that detects a taillight based on the color image of the second exposure data; and means that detects a pedestrian based on an image obtained by processing the infrared grayscale image and the color image of the second exposure data.

Further, the present invention is **characterized in that** the second exposure data and the third exposure data are standardized by having the second shutter speed and the third shutter speed be the same.

Effects of the Invention

With the present invention, headlights of oncoming cars, taillights of cars ahead, and pedestrians at night may be detected simultaneously and with high precision. Since it only requires the use of one small camera, costs may be reduced. In addition, utilizing detection results, it opens possibilities for a wide range of applications, such as direction and brightness control for headlight beams, warnings to drivers, and, further, drive control, etc., thereby contributing to safe driving.

BRIEF DESCRIPTION OF THE DRAWINGS

Figure 1 is an overview of the overall configuration of Embodiment 1 of the present invention.
Figure 2 shows an overview of internal configurations of a camera 101 and an image analysis unit 102.
Figure 3 shows an overview of an internal configuration of the camera 101.
Figure 4 shows an arrangement of light receiving elements within an imaging device.
Figure 5 is a flowchart showing the procedure of a process with respect to Embodiment 1 of the present invention.
Figure 6(a) is a scene that may be anticipated, (b) is an image exposed with a high-speed shutter, and (c) is an image exposed with a low-speed shutter.
Figure 7(a) is another scene that may be anticipated, and (b) is an image exposed with a low-speed shutter.
Figure 8 shows images that result from image processing, where (a) is an image resulting from performing image processing on an image where scene 601 is exposed with a high-speed shutter, (b) is an image that is a processing result obtained from an image where the same scene, 601, is exposed with a low-speed shutter, and (c) is an image that is a processing result obtained from an infrared grayscale image and visible color image where scene 601 is exposed with a low-speed shutter.
Figure 9 is a flowchart of a process with respect to Embodiment 2 of the present invention.
Figure 10 is a flowchart of a process with respect to Embodiment 3 of the present invention.

MODES FOR CARRYING OUT THE INVENTION

Best modes for carrying out the present invention are described below based on the drawings. However, the present invention may be carried out in numerous and varying modes, and is thus not to be construed as being limited to the disclosure of the present modes.

Embodiment 1

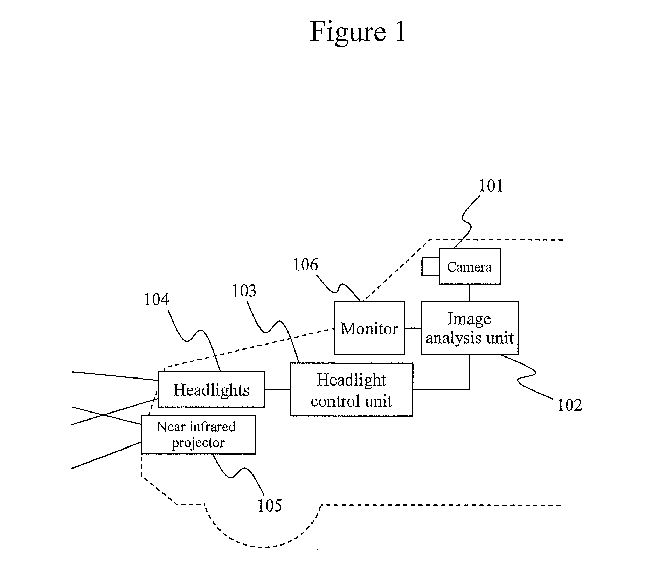

Figure 1 shows an overview of the overall configuration of Embodiment 1 of the present invention. A camera 101 is installed near the rear-view mirror so as to be able to shoot forward of the vehicle. A vehicle forward image taken by the camera 101 is inputted to an image analysis unit 102. The image analysis unit 102 performs image processing, and, by way of example, if there is a vehicle ahead, analyzes the distance to that vehicle. Based on distance information with respect to the vehicle ahead, a headlight control unit 103 calculates voltage amounts to be applied to high beams and low beams of headlights 104, and supplies the calculated voltage to the headlights 104. The illumination distance for the headlights is thus controlled based on the distance to the vehicle ahead.

Thus, since the object here is to control the illumination distance for the headlights, instead of the voltage amounts mentioned above, the headlight control unit 103 may also calculate, and supply, current amounts for the high beams and low beams. In addition, the headlight illumination distance may also be controlled by having filament or reflector parts of the headlights 104 be of a movable structure, and varying the optical axes of the headlights 104 by sending an optical axis angle control signal from the headlight control unit 103 to the headlights 104.

In order to make it possible to detect pedestrians at night with the camera 101, a near infrared projector 105 is installed on the vehicle, and it illuminates forward like the headlights. When there is a pedestrian ahead, s/he is illuminated by the near infrared projector 105, and an image thereof is received by the camera 101.

The image analysis unit 102 looks for regions having high brightness values, and detects, from thereamong and as being a pedestrian, a region having a pattern resembling a pedestrian. By superimposing and drawing, over the inputted image, a rectangle around the detected pedestrian candidate position, and outputting that image on a monitor 106, the driver is alerted.

Instead of the monitor 106, the headlights 104 may be made the output destinations for the detection result, alerting the driver by varying the light distribution region when a pedestrian is detected. Further, the driver may also be alerted by producing audio through speakers, etc.

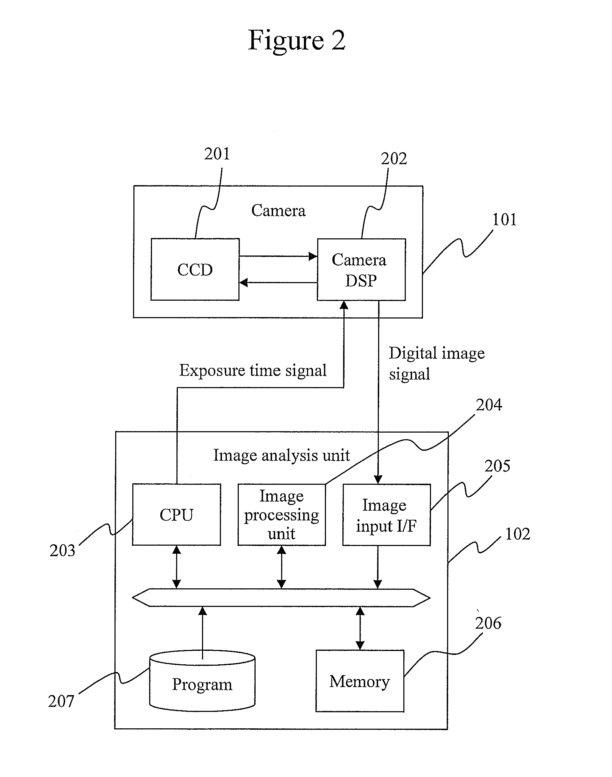

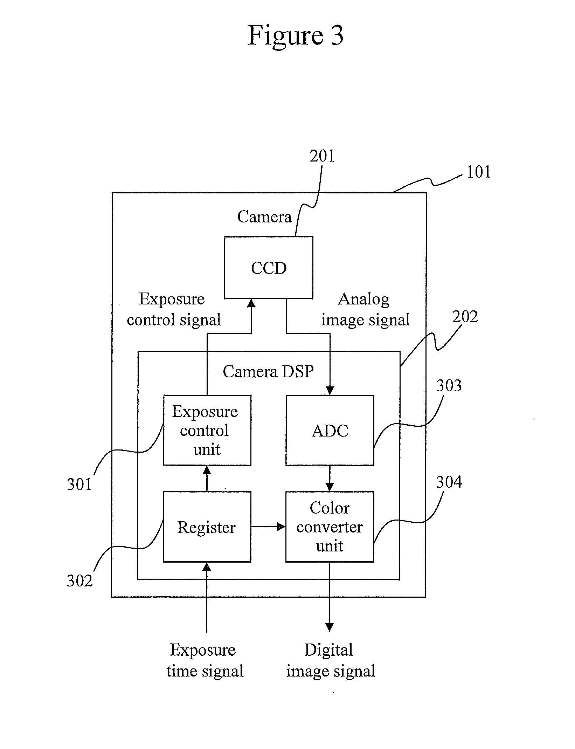

Figure 2 shows an overview of the internal configurations of the camera 101 and the image analysis unit 102. Figure 3 shows an overview of the internal configuration of the camera 101.

CCD 201 is an imaging device that converts light into charge. It converts an image forward of the vehicle into an analog image signal, and transfers it to a camera DSP 202. As shown in Figure 3, an ADC 303 (Analog Digital Converter) is provided inside the camera DSP 202. The analog image signal is converted into a digital signal, and the color signal is converted into a YUV signal at a color converter unit 304. Then, the converted signal is sent to an image input I/F 205 of the image analysis unit 102.

Although the image signal is sent continuously, a synchronizing signal is included at the beginning thereof, and at the image input I/F 205, it is possible to only import images when necessary. The image imported to the image input I/F 205 is written to memory 206, and processing and analysis are performed by the image processing unit 204. Details of this process will be discussed later. The whole process is performed in accordance with a program 207 written to flash memory. The control and requisite calculations for importing an image at the image input I/F 205 and for performing image processing at the image processing unit 204 are performed by a CPU 203.

Here, an exposure control unit 301 for performing exposure control and a register 302 for setting the exposure time are built into the camera DSP 202. The CCD 201 takes an image with the exposure time that has been set in the register 302 of the camera DSP 202. The register 302 is rewritable from the CPU 203, and the rewritten exposure time is reflected when an image is taken in the next frame or the next field and thereafter.

The exposure time may be controlled by having the power of the CCD 201 turned on and off by the camera DSP 202, where the amount of light that hits the CCD 201 is regulated depending on how long it is turned on for. While exposure time control is realized through an electronic shutter system such as the one above, it is also possible to employ a system in which a mechanical shutter is opened/closed. In addition, the exposure amount may also be varied by adjusting the diaphragm. Further, in cases where scanning is performed every other line, as in interlacing, the exposure amount may be varied between odd lines and even lines.

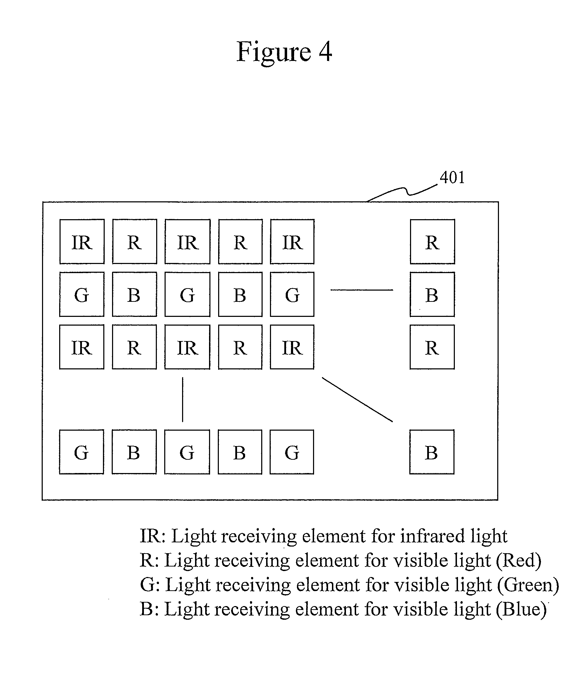

Figure 4 shows an arrangement for the light receiving elements within the imaging device. Four types of filters that are transparent with respect to differing wavelengths are respectively added and disposed on the light receiving elements. In Figure 4, the following designations are used - IR: light receiving elements for infrared light, R: light receiving elements for visible light (red), G: light receiving elements for visible light (green), and B: light receiving elements for visible light (blue). A method of extracting and converting such color information will be discussed later.

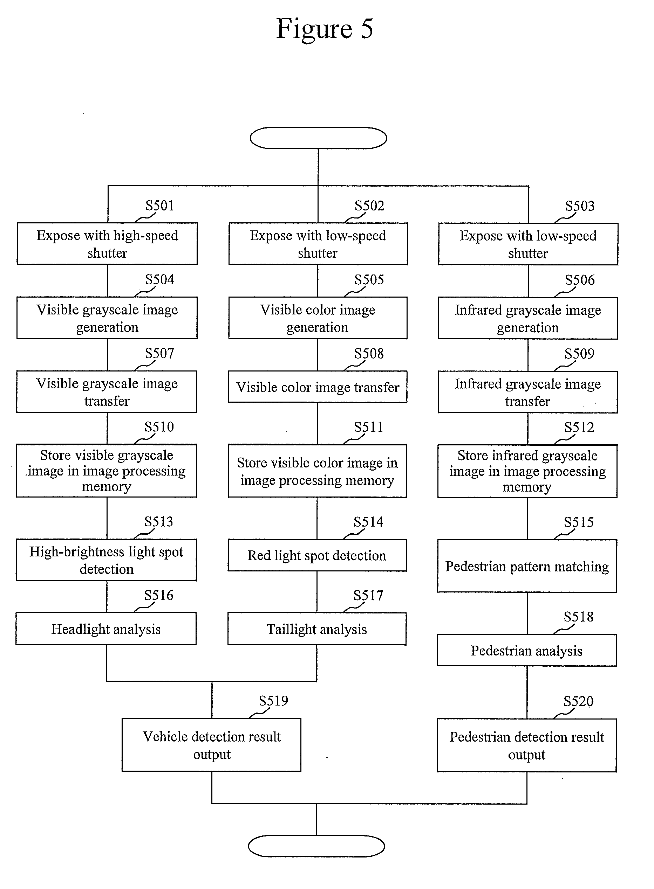

Figure 5 is a flowchart showing the procedure of a process with respect to Embodiment 1 of the present invention. As shown in the figure, this flowchart comprises three flows, and these flows are individually processed with some time lag thereamong using the one camera mentioned above. Here, by way of example, the flow beginning with step S501 is performed first, jumping next to the flow beginning with step S502, and the flow beginning with step S503 is performed at last. However, the order is by no means limited as such.

First, exposure is carried out with a high-speed shutter in step S501. For this high-speed shutter value, by way of example, a short exposure time that allows for light from the headlights of an oncoming car 500 m away to be barely captured is set. This is because a longer exposure time would cause light that becomes noise, such as street lights, traffic lights, etc., to enter the image. Next, in step S504, a visible grayscale image is generated. Using an RGB filter, the visible grayscale image is converted into a signal of luminance signal Y and chrominance signals U, V. This conversion is performed at the color converter unit 304 within the camera DSP using conversion equations, namely Equations 1 to 3 below.

$$\text{Equation 1} \qquad Y = 0.299R + 0.587G + 0.114B$$

$$\text{Equation 2} \qquad U = 0$$

$$\text{Equation 3} \qquad V = 0$$

Each of YUV is 8 bits, where Y assumes a value ranging from 0 to 255, and U and V -128 to 127. The signal thus converted into YUV is transferred to the image analysis unit 102 as a digital image signal in step S507, and stored in the memory 206 in step S510.

In step S513, a region of high-brightness light spots is detected from among the image data stored in the memory 206. This may be achieved by cutting out a region whose brightness value is at or above a threshold.

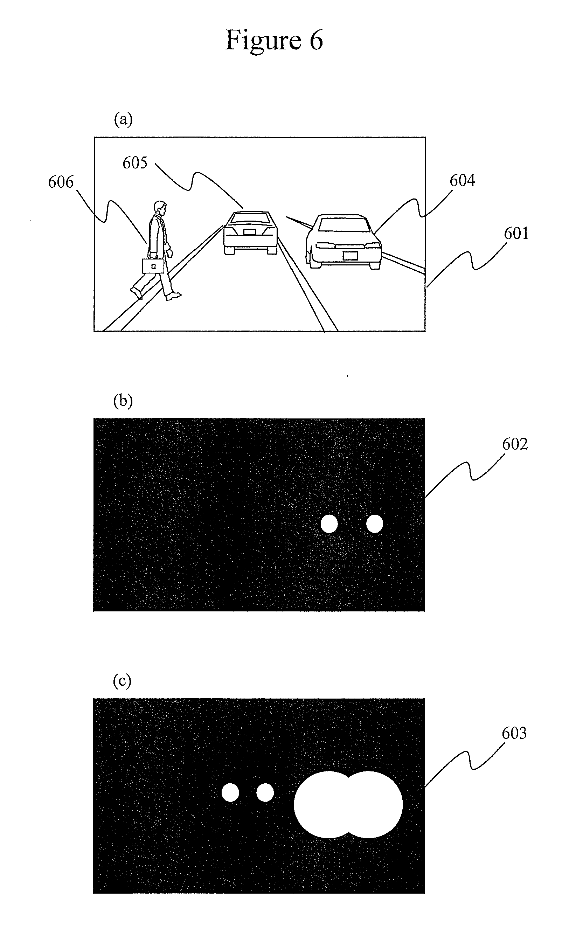

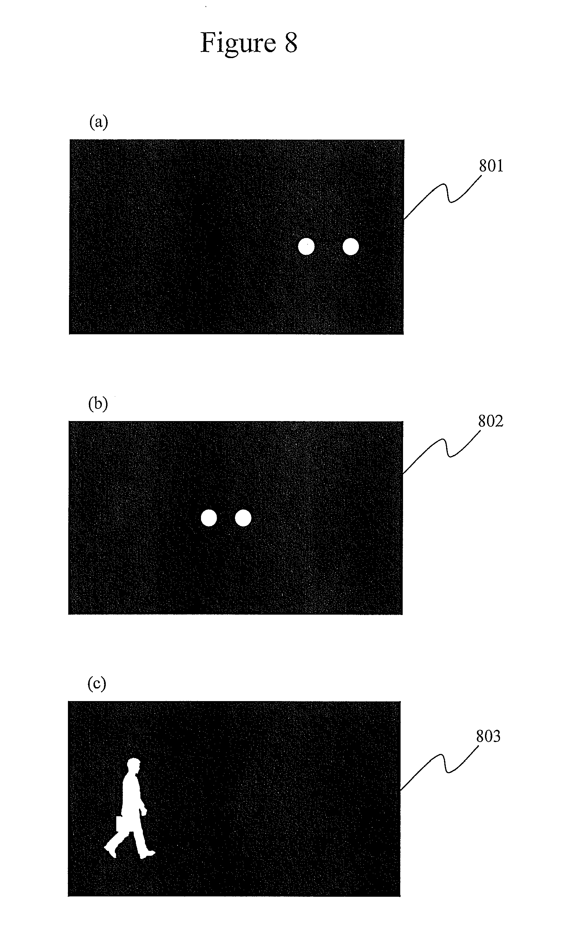

By way of example, assuming a scene such as the one in Figure 6(a), an image exposed with a high-speed shutter would resemble image 602 in Figure 6(b), and a cut out region would resemble image 801 in Figure 8(a). Next, in step S516, a headlight analysis is performed. Ordinarily, headlights and taillights of cars would appear as a total of two spots of light on the left and right. Accordingly, a labeling process is performed based on this picture to pair up the light spots. Performing pairing allows for the left-right width within the image to be measured, and it thus becomes possible to roughly calculate the distance to the oncoming car based on the principles of triangulation.

Next, the process jumps to the next flow in the flowchart shown in Figure 5. In step S502, exposure is performed with a low-speed shutter. It is assumed that this shutter value is a sufficiently long exposure time such that, by way of example, light from the taillights of a car 500 m ahead may be captured. As such, it becomes longer than the shutter speed used in step S501. In step S505, using an RGB filter, the exposed data is converted into a signal of luminance signal Y and chrominance signals U and V. The conversion equations in this case are the same as Equations (1) to (3) above. Here, the signal converted into YUV is transferred to the image analysis unit 102 as a digital image signal in step S508, and stored in the memory 206 in step S511.

In step S514, a region of red light spots is detected from among the image data stored in the memory 206. First, saturation S and hue H of U and V in a two-dimensional space may be represented using Equations 4 and 5 below.

[Eq. 1]

$$\text{Equation 4} \qquad S = \sqrt{U^2 + V^2}$$

$$\text{Equation 5} \qquad H = \tan^{-1} \frac{U}{V}$$

Here, by defining a portion whose saturation S is at or above a given value and which is between purple and orange within hue space H as being red, red regions may be represented through Equations 6 and 7 below using constants α, β, and γ.

[Eq. 2]

$$\text{Equation 6} \qquad \alpha \leq S$$

$$\text{Equation 7} \qquad \beta \leq H \leq \gamma$$

In the case of the scene shown in Figure 6(a), an image exposed with a low-speed shutter would resemble image 603 in Figure 6(c), and the red region would resemble image 802. When exposed with a low-speed shutter, a lot of strong light, such as that from headlights, enters, thereby causing blooming at that portion. However, by using color information, it is possible to efficiently keep just the light from the taillights.

Once red light spots have been extracted, a taillight analysis is performed in step S517, as was done in the case of headlights. A labeling process is performed with respect to image 802 in Figure 8(b), the light spots are paired up, and the distance to the car ahead is roughly calculated based on the principles of triangulation. Once the approximate distances to the oncoming car and the car ahead are calculated by analyzing the positions of the headlights and taillights, the obtained results are integrated in step S519, and are sent to the headlight control unit 103 as a CAN (Control Area Network) signal, for example.

Next, in step S503, exposure is performed with a low-speed shutter. For this shutter value, an exposure time that is sufficiently long such that, by way of example, using the near infrared projector 105, reflected light from a pedestrian 100 m away would be captured is set. Since this shutter speed is, like that which is set in step S502, sufficiently long, by performing exposure just once, the result thereof may be used for both visible color image generation and infrared grayscale image generation.

With respect to the flowchart shown in Figure 5, a grayscale image of infrared light is generated in step S506. Conversion to this end is performed through Equations 8 to 10 below which directly set the luminance signal to the IR intensity value.

$$\text{Equation 8} \qquad Y = IR$$

$$\text{Equation 9} \qquad U = 0$$

$$\text{Equation 10} \qquad V = 0$$

The signal thus converted into YUV is transferred to the image analysis unit 102 as a digital image signal in step S509, and is stored in the memory 206 in step S512.

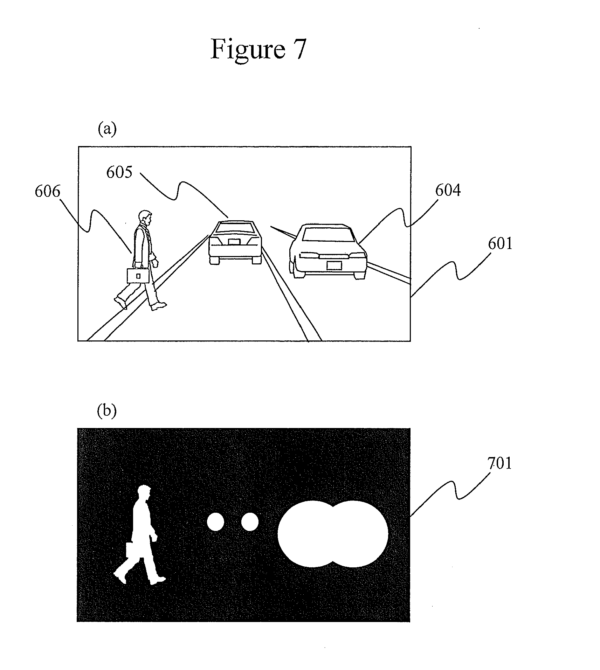

In the case of a scene such as that shown in Figure 7(a), an infrared grayscale image exposed with a low-speed shutter would resemble image 701 in Figure 7(b). In addition, subtracting the lights spots in image 603 from image 701 using visible color image 603 exposed with a low-speed shutter would result in an image resembling image 803 in Figure 8(c). Thus, it is possible to mitigate the influence of light-emitting bodies, such as headlights, taillights, traffic lights, etc., other than objects reflecting to the near infrared projector.

Next, in step S515, pedestrian pattern matching is performed with respect to image 701 or image 803 to extract a pattern resembling a pedestrian. For this pattern matching, there have been proposed numerous detection methods that employ strong classifiers such as neural networks or SVM (support vector machine), or that employ weak classifiers such as AdaBoost, etc. By way of example, the systems disclosed in Patent Document 2 and Patent Document 3 may also be used.

Once a pedestrian region is extracted from the image, a pedestrian analysis is performed in step S518. As pedestrian patterns are complex and they sometimes move, erroneous detections are also generally frequent. As such, by tracking the movement of pedestrians based on the motion vectors of pedestrians or the motion vector of the host vehicle to perform exclusion when a non-pedestrian-like motion is observed, an erroneous detection level reducing effect is achieved. Finally, in step S520, pedestrian candidate regions are put together, and the information is transferred to the monitor 106 and the headlight control unit 103 via CAN.

Embodiment 2

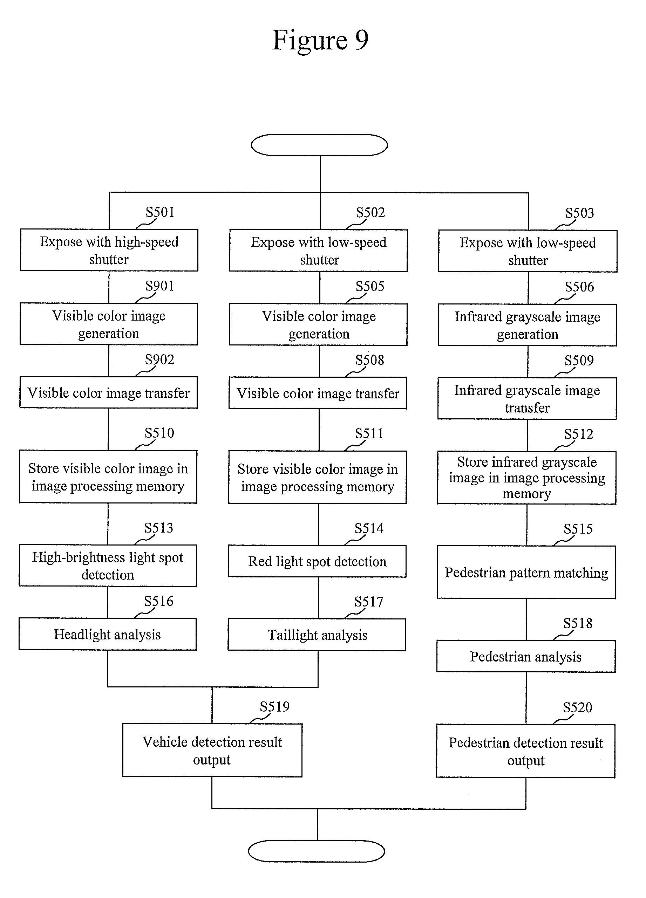

Figure 9 shows a flowchart of a process of Embodiment 2. In Embodiment 2, a color image is generated and transferred in place of the visible grayscale image in Embodiment 1. In Embodiment 2, by excluding colored light when strong light is received from something other than headlights, e.g., from a traffic signal, it is possible to completely eliminate any erroneous identification of it as being a headlight. In the case of color, the conversion to a YUV signal is performed using conversion equations, namely Equations 11 to 13 below.

$$\text{Equation 11} \qquad Y = 0.299R + 0.587G + 0.114B$$

$$\text{Equation 12} \qquad U = \text{-}0.169R - 0.331G + 0.500B$$

$$\text{Equation 13} \qquad V = 0.500R - 0.419G - 0.081B$$

With the exception of the points mentioned above, the remaining features of Embodiment 2 are the same as Embodiment 1, and descriptions will therefore be omitted.

Embodiment 3

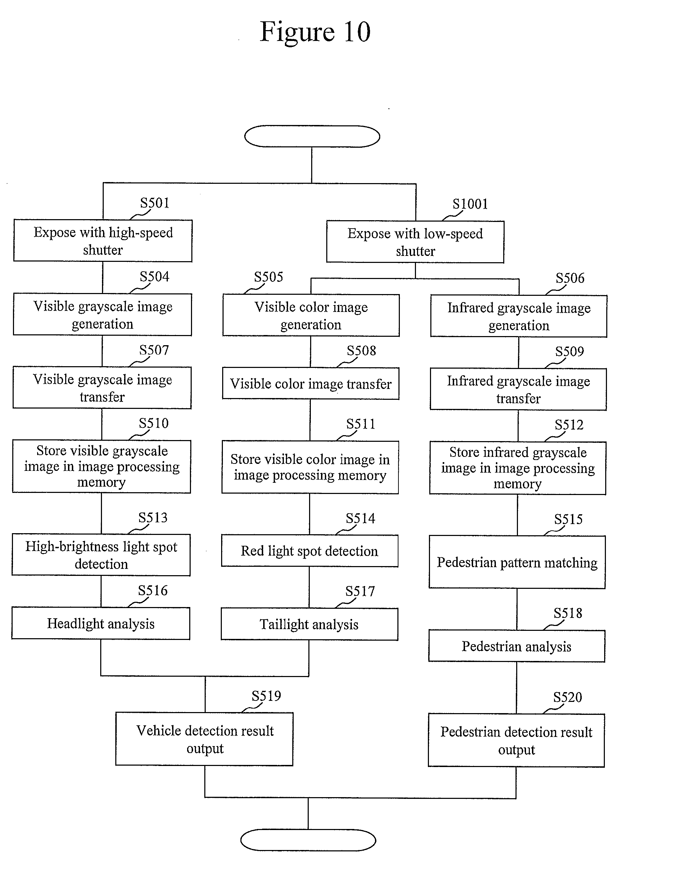

Embodiment 3 performs the exposure performed with the low-speed shutter in Embodiment 1 or Embodiment 2 once, and uses the result thereof for both visible color image generation and infrared grayscale image generation. Figure 10 shows a flowchart of a process of Embodiment 3. Here, exposure is performed only once in step 1001. As a result, it is possible to reduce the transfer amount of image data, and to shorten the processing cycle.

With the exception of the points mentioned above, the remaining features of Embodiment 3 are the same as Embodiment 1 or 2, and descriptions will therefore be omitted.

List of Reference Numerals

101: camera, 102: image analysis unit, 103: headlight control unit, 104: headlights, 105: near infrared projector, 106: monitor, 201: CCD (Charge Coupled Device Image Sensor), 202: camera DSP (Digital Signal Processor), 203: CPU (Central Processing Unit), 204: image processing unit, 205: image input interface, 206: memory, 207: program, 301: exposure control unit, 302: register, 303: ADC (Analog to Digital Converter), 304: color converter unit, 401: imaging device, 601: example of actual scene, 602: (visible light) high-speed shutter exposure image, 603: (visible light) low-speed shutter exposure image, 604: another example of actual scene, 604: oncoming car, 605: car ahead, 606: pedestrian, 701: near infrared light low-speed shutter exposure image, 801: processed image for headlight detection, 802: processed image for taillight detection, 803: processed image for pedestrian detection.

**Claims**

1. An image processing apparatus comprising:

   means that obtains first exposure data at a first shutter speed;
   means that obtains second exposure data at a second shutter speed that is slower than the shutter speed;
   means that obtains third exposure data at a third shutter speed that is slower than the first shutter speed;
   means that converts the first exposure data into a visible grayscale image;
   means that outputs the visible grayscale image;
   means that converts the second exposure data into a color image;
   means that outputs the color image;
   means that converts the third exposure data into an infrared grayscale image; and
   means that outputs the infrared grayscale image.

2. The image processing apparatus according to claim 1, further comprising:

   means that detects a headlight based on the visible grayscale image;
   means that detects a taillight based on the color image; and
   means that detects a pedestrian based on an image obtained by processing the infrared grayscale image and the color image.

3. An image processing apparatus comprising:

means that obtains first exposure data at a first shutter speed;
means that obtains second exposure data at a second shutter speed that is slower than the shutter speed;
means that obtains third exposure data at a third shutter speed that is slower than the first shutter speed;
means that converts the first exposure data into a color image;
means that outputs the color image;
means that converts the second exposure data into a color image;
means that outputs the color image;
means that converts the third exposure data into an infrared grayscale image; and
means that outputs the infrared grayscale image.

4. The image processing apparatus according to claim 3, further comprising:

means that detects a headlight based on the color image of the first exposure data;
means that detects a taillight based on the color image of the second exposure data; and
means that detects a pedestrian based on an image obtained by processing the near infrared light grayscale image and the color image of the second exposure data.

5. An image processing apparatus comprising:

means that obtains first exposure data at a first shutter speed;
means that obtains second exposure data at a second shutter speed that is slower than the shutter speed;
means that converts the first exposure data into a visible grayscale image or a color image;
means that outputs the visible grayscale image or the color image;
means that converts the second exposure data into a color image;
means that outputs the color image;
means that coverts the second exposure data into an infrared grayscale image; and
means that outputs the infrared grayscale image.

6. The image processing apparatus according to claim 5, further comprising:

means that detects a headlight based on the visible grayscale image or color image of the first exposure data;
means that detects a taillight based on the color image of the second exposure data; and
means that detects a pedestrian based on an image obtained by processing the infrared grayscale image and the color image of the second exposure data.

# Figure 1

101

106    Camera

104    103    102

Monitor    Image
analysis unit

Headlights    Headlight
control unit

Near infrared
projector

105

# Figure 2

201     202

Camera

101

CCD → Camera DSP

Exposure time signal

Digital image signal

204

Image analysis unit

205

CPU    Image processing unit    Image input I/F

203

102

206

Program

Memory

207

# Figure 3

# Figure 4

IR: Light receiving element for infrared light
R: Light receiving element for visible light (Red)
G: Light receiving element for visible light (Green)
B: Light receiving element for visible light (Blue)

# Figure 5

```
                                    ┌──────────┐
                                    │          │
                                    └──────────┘
                                         │
         ┌───────────────────────────────┼───────────────────────────────┐
         │ S501                          │ S502                          │ S503
    ┌────────────────┐            ┌────────────────┐            ┌────────────────┐
    │ Expose with    │            │ Expose with    │            │ Expose with    │
    │ high-speed     │            │ low-speed      │            │ low-speed      │
    │ shutter        │            │ shutter        │            │ shutter        │
    └────────────────┘            └────────────────┘            └────────────────┘
         │ S504                          │ S505                          │ S506
    ┌────────────────┐            ┌────────────────┐            ┌────────────────┐
    │ Visible        │            │ Visible color  │            │ Infrared       │
    │ grayscale image│            │ image          │            │ grayscale image│
    │ generation     │            │ generation     │            │ generation     │
    └────────────────┘            └────────────────┘            └────────────────┘
         │ S507                          │ S508                          │ S509
    ┌────────────────┐            ┌────────────────┐            ┌────────────────┐
    │ Visible        │            │ Visible color  │            │ Infrared       │
    │ grayscale image│            │ image transfer │            │ grayscale image│
    │ transfer       │            │                │            │ transfer       │
    └────────────────┘            └────────────────┘            └────────────────┘
         │ S510                          │ S511                          │ S512
    ┌────────────────┐            ┌────────────────┐            ┌────────────────┐
    │ Store visible  │            │ Store visible  │            │ Store infrared │
    │ grayscale image│            │ color image in │            │ grayscale image│
    │ in image       │            │ image          │            │ in image       │
    │ processing     │            │ processing     │            │ processing     │
    │ memory         │            │ memory         │            │ memory         │
    └────────────────┘            └────────────────┘            └────────────────┘
         │ S513                          │ S514                          │ S515
    ┌────────────────┐            ┌────────────────┐            ┌────────────────┐
    │ High-brightness│            │ Red light spot │            │ Pedestrian     │
    │ light spot     │            │ detection      │            │ pattern        │
    │ detection      │            │                │            │ matching       │
    └────────────────┘            └────────────────┘            └────────────────┘
         │ S516                          │ S517                          │ S518
    ┌────────────────┐            ┌────────────────┐            ┌────────────────┐
    │ Headlight      │            │ Taillight      │            │ Pedestrian     │
    │ analysis       │            │ analysis       │            │ analysis       │
    └────────────────┘            └────────────────┘            └────────────────┘
         │                              │                              │ S520
         └──────────────┬───────────────┘ S519                  ┌────────────────┐
                 ┌────────────────┐                             │ Pedestrian     │
                 │ Vehicle        │                             │ detection      │
                 │ detection      │                             │ result output  │
                 │ result output  │                             └────────────────┘
                 └────────────────┘                                    │
                         │                                             │
                         └──────────────────────┬──────────────────────┘
                                    ┌──────────┐
                                    │          │
                                    └──────────┘
```

# Figure 6

(a)

(b)

(c)

# Figure 7

(a)

(b)

# Figure 8

(a)

801

(b)

802

(c)

803

# Figure 9

```
                              (        )
                                  |
        ┌─────────────────────────┼─────────────────────────┐
        │                         │                         │
      S501                      S502                      S503
┌─────────────────┐     ┌─────────────────┐     ┌─────────────────┐
│ Expose with     │     │ Expose with     │     │ Expose with     │
│ high-speed      │     │ low-speed       │     │ low-speed       │
│ shutter         │     │ shutter         │     │ shutter         │
└─────────────────┘     └─────────────────┘     └─────────────────┘
      S901                      S505                      S506
┌─────────────────┐     ┌─────────────────┐     ┌─────────────────┐
│ Visible color   │     │ Visible color   │     │ Infrared        │
│ image           │     │ image           │     │ grayscale image │
│ generation      │     │ generation      │     │ generation      │
└─────────────────┘     └─────────────────┘     └─────────────────┘
      S902                      S508                      S509
┌─────────────────┐     ┌─────────────────┐     ┌─────────────────┐
│ Visible color   │     │ Visible color   │     │ Infrared        │
│ image transfer  │     │ image transfer  │     │ grayscale image │
│                 │     │                 │     │ transfer        │
└─────────────────┘     └─────────────────┘     └─────────────────┘
      S510                      S511                      S512
┌─────────────────┐     ┌─────────────────┐     ┌─────────────────┐
│ Store visible   │     │ Store visible   │     │ Store infrared  │
│ color image in  │     │ color image in  │     │ grayscale image │
│ image           │     │ image           │     │ in image        │
│ processing      │     │ processing      │     │ processing      │
│ memory          │     │ memory          │     │ memory          │
└─────────────────┘     └─────────────────┘     └─────────────────┘
      S513                      S514                      S515
┌─────────────────┐     ┌─────────────────┐     ┌─────────────────┐
│ High-brightness │     │ Red light spot  │     │ Pedestrian      │
│ light spot      │     │ detection       │     │ pattern         │
│ detection       │     │                 │     │ matching        │
└─────────────────┘     └─────────────────┘     └─────────────────┘
      S516                      S517                      S518
┌─────────────────┐     ┌─────────────────┐     ┌─────────────────┐
│ Headlight       │     │ Taillight       │     │ Pedestrian      │
│ analysis        │     │ analysis        │     │ analysis        │
└─────────────────┘     └─────────────────┘     └─────────────────┘
                      S519                      S520
              ┌─────────────────┐     ┌─────────────────┐
              │ Vehicle         │     │ Pedestrian      │
              │ detection       │     │ detection       │
              │ result output   │     │ result output   │
              └─────────────────┘     └─────────────────┘
                              (        )
```

# Figure 10

```
                    (      )
                       |
        ┌──────────────┴──────────────┐
        │ S501                        │ S1001
  ┌─────┴─────────┐            ┌───────┴────────┐
  │ Expose with   │            │ Expose with    │
  │ high-speed    │            │ low-speed      │
  │ shutter       │            │ shutter        │
  └─────┬─────────┘            └───────┬────────┘
        │ S504         S505            │         S506
  ┌─────┴─────────┐  ┌────┴──────┐  ┌──┴──────────┐
  │ Visible       │  │ Visible   │  │ Infrared    │
  │ grayscale     │  │ color     │  │ grayscale   │
  │ image         │  │ image     │  │ image       │
  │ generation    │  │ generation│  │ generation  │
  └─────┬─────────┘  └────┬──────┘  └──┬──────────┘
```

## INTERNATIONAL SEARCH REPORT

| | International application No. |
|---|---|
| | PCT/JP2010/058757 |

**A. CLASSIFICATION OF SUBJECT MATTER**

*G08G1/16*(2006.01)i, *B60Q1/08*(2006.01)i, *B60Q1/14*(2006.01)i, *B60Q1/24*
(2006.01)i, *G06T1/00*(2006.01)i, *H04N7/18*(2006.01)i

According to International Patent Classification (IPC) or to both national classification and IPC

**B. FIELDS SEARCHED**

Minimum documentation searched (classification system followed by classification symbols)
G08G1/16, B60Q1/08, B60Q1/14, B60Q1/24, G06T1/00, H04N7/18

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2005-92861 A (Hitachi, Ltd.), 07 April 2005 (07.04.2005), paragraphs [0042] to [0054] & JP 2005-92857 A  & US 2005/0036660 A1 & US 2008/0278577 A1  & EP 1513103 A2 | 1-6 |
| Y | JP 2008-299538 A (Toyota Motor Corp.), 11 December 2008 (11.12.2008), paragraphs [0010], [0011], [0020], [0023] & US 2008/0297374 A1  & DE 102008002086 A | 1-6 |
| Y | JP 2008-135856 A (Toyota Motor Corp.), 12 June 2008 (12.06.2008), paragraphs [0021], [0023], [0030] (Family: none) | 1-6 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 June, 2010 (02.06.10) | 15 June, 2010 (15.06.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2010/058757 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2008-186342 A  (Fuji Heavy Industries Ltd.),<br>14 August 2008 (14.08.2008),<br>entire text<br>& US 2008/0181461 A1     & DE 102008006375 A | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62131837 A
- JP 11243538 A
- JP 11328364 A
- JP 2001189926 A